(19) Europäisches Patentamt
European Patent Office
Office européen des brevets

(11) Publication number: **0 393 753 A2**

(12) # EUROPEAN PATENT APPLICATION

(21) Application number: **90200877.0**

(22) Date of filing: **10.04.90**

(51) Int. Cl.5: **C08L 73/00, C08G 67/02, //(C08L73/00,23:00)**

(30) Priority: **17.04.89 US 338701**

(43) Date of publication of application: **24.10.90 Bulletin 90/43**

(84) Designated Contracting States: **AT BE CH DE ES FR GB GR IT LI NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Gergen, William Peter**
**11311 Hylander Street**
**Houston, Texas 77070(US)**
Inventor: **Lutz, Robert Gardiner**
**632 Vista Grande Place**
**Santa Rosa, California(US)**

(74) Representative: **Aalbers, Onno et al**
**P.O. Box 302**
**NL-2501 CH The Hague(NL)**

(54) **Polyketone polymer composition.**

(57) Polyketone polymer composition comprising (a) a linear alternating polymer of carbon monoxide and at least one ethylenically unsaturated hydrocarbon, and (b) a partial non-alkali metal salt of a polymer of an $\alpha$-olefin, an unsaturated carboxylic acid, and optionally a third monomer; and a process for its preparation.

EP 0 393 753 A2

# POLYKETONE POLYMER COMPOSITION

This invention relates to a composition comprising predominantly a polyketone polymer, that is, a linear alternating polymer of carbon monoxide and at least one ethylenically unsaturated compound.

Whilst being known for some time, more recently, the linear alternating polymers of carbon monoxide and at least one ethylenically unsaturated compound, e.g., ethylene or ethylene and propylene, have become of greater interest in part because of the greater availability of the polymers. These polymers have been shown to be of the repeating formula $-CO-(A)-$ where A is the moiety of unsaturated compound polymerized through the ethylenic unsaturation. For example, when the compound is ethylene, the polymer is represented by the repeating formula $-CO-(CH_2-CH_2)-$. The general process for the more recent product of such polymers is illustrated by European Patent Applications 121965 and 181014.

The resulting polymers are relatively high molecular weight thermoplastics having utility in the production of shaped articles such as containers for the food and drink industry and internal and external parts for the automotive industry which are produced by processing the polymer according to known methods. For some particular applications it has been found desirable to have properties for a polymeric composition which are somewhat different from those of the linear alternating polymers. It would be of advantage to retain the desirable properties of these polymers and yet improve other properties.

Good processability of the linear alternating polymers is an important feature in the application areas indicated above, for example, because the manufacture of such articles may imply more than one melt processing step, or because scrap polymer needs to be recycled in order to manufacture economically. Therefore, it is the object of this invention to gain in melt processability of the polymers.

It has now been found that the melt processability of the linear alternating polymers of carbon monoxide and one or more ethylenically unsaturated compounds can be improved by blending the polymer with a partially neutralized polymer of an $\alpha$-olefin and an unsaturated acid. In addition, it has been found that the impact resistance of the blends is sometimes better than the impact resistance of the unblended linear alternating polymer.

Accordingly, the invention relates to a polyketone polymer composition characterized in comprising, as a major component, a linear alternating polymer of carbon monoxide and at least one ethylenically unsaturated hydrocarbon and, as a minor component, a partial non-alkali metal salt of a polymer of an $\alpha$-olefin and an $\alpha,\beta$-ethylenically unsaturated carboxylic acid.

The invention also relates to a process for the preparation of the compositions of the invention characterized by comprising the steps of:
preparing a linear alternating polymer of carbon monoxide and at least one ethylenically unsaturated compound by polymerizing said monomers in the presence of a catalyst composition based upon a palladium compound, an anion of a non-hydrohalogenic acid having a pKa below 6, and a bidentate ligand of phosphorus; and
blending the linear alternating polymer with a lesser amount of a polymer comprising a partial non-alkali metal salt of a polymer of an $\alpha$-olefin and an $\alpha,\beta$-ethylenically unsaturated carboxylic acid.

The polymers which are employed as the major component of the blends of the invention are linear alternating polymers of carbon monoxide and at least one ethylenically unsaturated compound. Suitable ethylenically unsaturated compounds for use as precursors of these polymers are hydrocarbons having up to 20 carbon atoms inclusive, preferably up to 10 carbon atoms inclusive, which are aliphatic such as ethylene and other $\alpha$-olefins including propylene, butylene, isobutylene, 1-hexene, 1-octene and 1-dodecene, or which are arylaliphatic containing an aromatic substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-methylstyrene. Preferred polymers are copolymers of carbon monoxide and ethylene or are terpolymers of carbon monoxide, ethylene and a second hydrocarbon of at least 3 carbon atoms, particularly an $\alpha$-olefin such as propylene. Ethylenically unsaturated compounds containing hetero atoms, e.g. acrylate esters, are suitable as comonomers as well.

The structure of these polymers is that of a linear alternating polymer of carbon monoxide and ethylenically unsaturated compound and the polymer will contain substantially one molecule of carbon monoxide for each molecule of unsaturated compound. When terpolymers of carbon monoxide, ethylene and a second hydrocarbon are employed in the blends of the invention, there will be within the terpolymer at least two units incorporating a moiety of ethylene for each unit incorporating a moiety of second hydrocarbon, preferably from 10 units to 100 units incorporating a moiety of ethylene per unit incorporating a moiety of the second hydrocarbon. The polymer chain is therefore represented by the formula

$$-[CO-(CH_2-CH_2)]_x-[CO-(D)]_y-$$

where D is the moiety obtained by polymerization of the second hydrocarbon through the ethylenic unsaturation. The $-CO-(CH)_2-CH_2-$ units and the -CO-(D)- units are found randomly throughout the polymer chain and the ratio of y:x is no more than 0.5. In the modification of the invention where a copolymer of carbon monoxide and ethylene is employed as a blend component there will be no second hydrocarbon and the polyketone polymer is represented by the above formula wherein y is 0. When y is other than 0, i.e., terpolymers are employed, ratios of y:x from 0.01 to 0.1 are preferred. The end groups or "caps" of the polymer chain will depend on what materials are present during the production of the polyketone and whether and how the polyketone is purified. The precise properties of the polymer will not depend upon the particular end groups to any considerable extent so that the polymer is fairly represented by the above formula for the polymeric chain. Of particular interest are the linear alternating polymers of molecular weight from 1,000 to 200,000, particularly those of a molecular weight from 20,000 to 90,000 as determined by gel permeation chromatography. The physical properties of such polymers will depend in part upon the molecular weight of the polymer, whether the polymer is a copolymer or a terpolymer and the relative proportion of second hydrocarbon present in the case of the terpolymers. Typical melting points of such polymers are from 175°C to 300°C, more frequently from 210°C to 270°C. The polymers will have a limiting viscosity number (LVN), measured in a standard capillary viscosity measuring device in m-cresol at 60°C, from 0.5 to 10, preferably from 0.8 to 4.

A method of producing the linear alternating polymers which is now becoming conventional is to contact carbon monoxide and the unsaturated compound(s) in the presence of a catalyst composition based upon a palladium compound, the anion of a non-hydrohalogenic acid having a pKa below 6 and a bidentate phosphorus ligand. The scope of this process of production is extensive, but without wishing to be limited, a preferred palladium compound is a palladium carboxylate, particularly palladium acetate, the preferred anion is the anion of trifluoroacetic acid or p-toluenesulphonic acid and the preferred bidentate ligand is 1,3-bis(diphenylphosphino)propane or 1,3-bis[di(2-methoxyphenyl)phosphino]propane.

The above process is conducted in a gas phase or in a liquid phase in the presence of an inert liquid diluent such as methanol or ethanol. The reactants are contacted in the presence of the catalyst composition by conventional methods such as shaking or stirring in a reaction vessel. Suitable reaction temperatures are from 20°C to 150°C with preferred reaction temperatures being from 50°C to 135°C. Typical reaction pressures are from 1 bar to 200 bar, more typically from 10 bar to 100 bar. Subsequent to reaction the polymer is recovered as by decantation or filtration. The polymer product may contain residues of the catalyst composition which are removed, if desired, by treatment of the polymer product with a solvent or complexing agent which is selective for the residues.

The minor component of the blends of the invention is a partial non-alkali metal salt of an α-olefin/unsaturated carboxylic acid polymer optionally containing a small proportion of a third monomer. By the term partial non-alkali metal salt is meant that some but not all of the carboxylic acid moieties have been neutralized with zinc, aluminium, or magnesium as further discussed below. Because the partially neutralized material retains ionic character while being polymeric in form, the material is often referred to as a metal ionomer.

The α-olefin component of the partially neutralized zinc ionomer is an α-olefin of up to 10 carbon atoms inclusive such as ethylene, propylene, 1-butene, 1-octene and 1-decene. Preferred α-olefins are straight chain α-olefins of up to 4 carbon atoms inclusive and particularly preferred is ethylene. The α-olefin component of the partially neutralized polymer is present in at least 80% by mol, based on the total base polymer, i.e., the non-neutralized polymer, and preferably present in at least 90% by mol on the same basis.

The unsaturated carboxylic acid component of the partially neutralized polymer is preferably an α,β-ethylenically unsaturated carboxylic acid of up to 10 carbon atoms inclusive and is illustrated by acrylic acid, 2-hexenoic acid, 2-octenoic acid and 2-decenoic acid. The preferred α,β-ethylenically unsaturated carboxylic acids have up to 4 carbon atoms inclusive. These are acrylic acid, methacrylic acid and crotonic acid, of which, methacrylic acid is particularly preferred. The unsaturated carboxylic acid content of the partially neutralized polymer component of the blends is from 1% by mol to 20% by mol based on the base or non-neutralized polymer. Amounts of carboxylic acid from 9% by mol to 15% by mol on the same basis are preferred.

The partially neutralized polymer is suitably a copolymer of the α-olefin and the α,β-unsaturated carboxylic acid and in general such copolymers are preferred. On occasion, however, it is useful to include as an optional component a third monomer which is a non-acidic low molecular weight polymerizable monomer of up to 8 carbon atoms inclusive. Such optional third components of the partially neutralized polymer may be other olefins, particularly other α-olefins such as propylene or styrene when the major α-olefin component of the partially neutralized polymer is ethylene, unsaturated esters such as vinyl acetate, methyl methacrylate and butyl acrylate, unsaturated halohydrocarbons such as vinyl chloride and vinyl fluoride and unsaturated nitriles such as acrylonitrile. As previously stated, the presence of a polymerizable third component within the partially neutralized polymer is optional and no third component is required. When a third component is present, however, amounts of the third component up to 5% by mol, based on the non-neutralized or base polymer are satisfactory with amounts of up to 3% by mol on the same basis being preferred.

The partially neutralized polymer, i.e., the metal ionomer, is produced by reacting the α-olefin/unsaturated carboxylic acid/optional third component polymer with a source of the ionizable metal compound sufficient to neutralize from 10% to 90% of the carboxylic acid groups present in the polymer. Such neutralization with an ionizable zinc compound, the preferred metal compound, results in a uniform distribution of zinc throughout the polymer. Neutralization of from 20% to 80% of the carboxylic acid groups is preferred and neutralization of from 35% to 75% of the carboxylic acid groups is particularly preferred. The metal ions suitably employed in the partial neutralization are uncomplexed non-alkali metal ions including zinc ions, aluminium ions, and magnesium ions which are provided in compounds of the type often referred to as metal salts, e.g., zinc chloride, zinc acetate, aluminium chloride, aluminium acetate and magnesium formate, or are complexed metal ions wherein the metal is bonded to two types of groups, at least one of which is readily ionized from the metal and the other is not. Illustrative of such complexed metal ions are mixed zinc, aluminium or magnesium salts with one weak acid such as oleic acid or stearic acid and one more ionizable acid such as acetic acid or formic acid. In general, neutralization with a complexed zinc ion is most preferred.

Methods of producing the metal ionomers are known in the art and are disclosed in U.S. 3,264,272 and U.S. 3,404,134. Certain of these partially neutralized polymers, i . e., the metal ionomers, are commercially available.

The blends of the invention comprise a mixture of a major proportion of the linear alternating polymer and a minor proportion of the partially neutralized polymer. The precise percentage of the partially neutralized polymer to be employed in the blend is not critical and amounts of partially neutralized polymer from 0.2% by weight to 35% by weight, based on the total blend, are satisfactory. Amounts of partially neutralized polymer from 1% by weight to 10% by weight on the same basis are preferred and amounts from 3% by weight to 7% by weight on the same basis are particularly preferred.

The method of preparing the blend of the linear alternating polymer and the partially neutralized polymer is not material as long as a relatively uniform distribution of the partially neutralized polymer throughout the polyketone is obtained. The polymer blend is a generally non-miscible blend with the partially neutralized polymer existing as a discrete phase having a phase size of from about 0.2 micron to about 2 microns, more typically on the order of 0.5 microns, the continuous phase being formed by the linear alternating polymer. The blend will therefore not be homogeneous, but the distribution of the partially neutralized polymer phase throughout the continuous phase will be substantially uniform. A preferred method of blending the components is by melt blending which is conventional for non-miscible polymeric materials. The materials are extruded in one modification employing a co-rotating twin screw extruder at a high RPM. In another modification the components are blended in a mixing device which exhibits high shear.

The blends of the invention may also include conventional additives such as antioxidants, stabilizers, fillers, fire resistant materials, mould release agents and other substances which are added to increase the processability of the polymer or modifying the properties of the resulting blend. Such additives are added by conventional methods prior to, together with, or subsequent to the blending of the linear alternating polymer and partially neutralized polymer.

The blends of the invention are characterized by improved processability and sometimes by improved impact resistance when compared to the linear alternating polymer. The blends are of particular utility where production of articles by melt processing involves multiple melt processing steps and/or recycle of scrap polymer or where moulded parts are desired which require toughness and impact resistance. The blends are processed by means of the usual techniques, such as injection moulding, into sheets, plates, films and shaped articles. Illustrative of such applications are the production of internal as well as external parts for automotive application and structural parts for utilization in the construction industry.

The invention is further illustrated by the following Examples.

Comparative Example A

A linear alternating terpolymer of carbon monoxide, ethylene and propylene was produced in the presence of a catalyst composition formed from palladium acetate, the anion of trifluoroacetic acid and 1,3-bis[di(2-methoxyphenyl)phosphino]propane. The melting point of the polymer was 224° C and the polymer had a limiting viscosity number (LVN) of 1.61 when measured in m-cresol at 60° C. A small amount of the n-octadecyl ester of 3-(3,5-di-t.butyl-4-hydroxyphenyl)propanoic acid, a conventional hindered phenolic antioxidant, was added as a stabilizer.

The terpolymer was extruded in a twin screw extruder at 271° C and 200 rpm then injection moulded at 240° C for measurement of impact strength. The moulded sample had a notched Izod impact strength of 14.2 m.kg/m and other properties as shown in Table I.

Comparative Example B

A moulded sample of the linear alternating polymer of Comparative Example A was produced with the same procedure as described in Comparative Example A except that before extrusion 0.5% by weight of 1,3,5-tris(3,5-di-t.butyl-4-hydroxybenzyl)benzene was added as an antioxidant. The moulded sample had a notched Izod impact strength of 15.3 m.kg/m and other properties as shown in Table I.

TABLE I

| TENSILE PROPERTIES | | | |
|---|---|---|---|
| | Tangent Modulus GPa | Tensile Max MPa | Tensile Break MPa |
| Comp. Example A | 1.37 | 62 | 3.28 |
| Comp. Example B | 1.45 | 63 | 2.88 |
| Example 1 | 1.42 | 61 | 3.22 |
| Example 2 | 1.41 | 59 | 3.12 |
| Example 3 | 1.43 | 61 | 3.23 |
| Example 4 | 1.39 | 59 | 3.30 |
| Example 5 | 1.34 | 55 | 3.31 |

Example 1

A moulded sample of a blend of the linear alternating polymer of Comparative Example A was produced, with the same procedure as described for Comparative Example B, except that 0.2% by weight (based on total blend) of SURLYN 9520 (trade mark), an α-olefin/unsaturated carboxylic acid polymer that is about 71% neutralized with zinc, was added in addition to 0.5% of 1,3,5-tris(3,5- di-t.butyl-4-hydroxybenzyl)-benzene. The polymer blend exhibited slightly better processability in comparison to the polymer of Comparative Example B. The moulded sample had a notched Izod impact strength of 14.2 m.kg/m and other properties as shown in Table I.

Example 2

A moulded sample of a blend of the linear alternating polymer of Comparative Example A was produced with the same procedure as described for Example 1, except that 0.5% by weight (based on total blend) of SURLYN 9520 was added instead of 0.2% by weight. The polymer blend exhibited better melt strength and processability in comparison to the polymer of Comparative Example B. The moulded sample had a notched Izod impact strength of 13.6 m.kg/m and other properties as shown in Table I.

Example 3

A moulded sample of a blend of the linear alternating polymer of Comparative Example A was produced with the same procedure as described for Example 1, except that 1.0% by weight (based on total blend) of SURLYN 9520 was added instead of 0.2% by weight. The polymer blend exhibited good melt strength and better processability in comparison to the polymer of Comparative Example B. The moulded sample had a notched Izod impact strength of 15.3 m.kg/m and other properties as shown in Table I.

Example 4

A moulded sample of a blend of the linear alternating polymer of Comparative Example A was produced with the same procedure as described for Example 1, except that 2.0% by weight (based on total blend) of SURLYN 9520 was added instead of 0.2% by weight. The polymer blend exhibited good melt strength and better processability in comparison to the polymer of Comparative Example B. The moulded sample had a notched Izod impact strength of 15.3 m.kg/m and other properties as shown in Table I.

Example 5

A moulded sample of a blend of the linear alternating polymer of Comparative Example A was produced with the same procedure as described for Example 1, except that 5.0% by weight (based on total blend) of SURLYN 9520 was added instead of 0.2% by weight. The polymer blend exhibited good melt strength and better processability in comparison to the polymer of Comparative Example B. The moulded sample had a notched Izod impact strength of 16.3 m.kg/m and other properties as shown in Table I.

Comparative Example C

A linear alternating terpolymer of carbon monoxide, ethylene and propylene was produced in the presence of a catalyst composition formed from palladium acetate, the anion of trifluoroacetic acid and 1,3-bis[di(2-methoxyphenyl)phosphino]propane. The melting point of the polymer was 220 °C and the polymer had a limiting viscosity number (LVN) of 1.29 when measured in m-cresol at 60 °C. Small amounts of the n-octadecyl ester of 3-(3,5-di-t.butyl-4-hydroxyphenyl)propanoic acid and 2,6-di-t.butyl-4-methylphenol, conventional hindered phenolic antioxidants, were added for stabilization.

The terpolymer was extruded in a twin screw 30 mm extruder at 240 °C and 200 rpm under a nitrogen blanket with a residence time of 0.5 minutes, then injection moulded for measurement of properties. The moulded sample had notched Izod impact strengths of 9.8 m.kg/m at room temperature and 4.9 m.kg/m at -20 °C.

Example 6

A moulded sample of a blend of the linear alternating polymer of Comparative Example C was produced with the same procedure as described in Comparative Example C except that before extrusion 0.3% by weight of 1,3,5-tris(3,5-di-t.butyl-4-hydroxybenzyl)benzene and 10% by weight (based on total blend) of SURLYN 9520 were added instead of the n-octadecyl ester of 3-(3,5-di-t.butyl-4-hydroxyphenyl-propionic acid and 2,6-di-t.butyl-4-methylphenol. The moulded sample had notched Izod impact strengths of 15.3 m.kg/m at room temperature and 8.2 m.kg/m at -20 °C.

Comparative Example D

A linear alternating terpolymer of carbon monoxide, ethylene and propylene was produced in the presence of a catalyst composition formed from palladium acetate, the anion of trifluoroacetic acid and 1,3-bis[di(2-methoxyphenyl)phosphino]propane. The melting point of the polymer was 220 °C and the polymer had a limiting viscosity number (LVN) of 1.96 when measured in m-cresol at 60 °C. A small amount of the n-octadecyl ester of 3-(3,5-di-t.butyl-4-hydroxyphenyl)propanoic acid and 2,6-di-t.butyl-4-methylphenol, conventional hindered phenolic antioxidants, were added as stabilizers.

The terpolymer was extruded in a twin screw 30 mm extruder at 280 °C and 200 rpm, then injection

moulded for measurement of impact strength. The moulded samples had a room temperature notched Izod impact strength of about 19.6 m.kg/m.

Comparative Example E

Moulded samples of the linear alternating polymer of Comparative Example D were produced with the same procedure as described in Comparative Example D except that before extrusion 0.5% by weight of 1,3,5-tris(3,5-di-t.butyl-4-hydroxybenzyl)benzene was added instead of the n-octadecyl ester of 3-(3,5-di-t.butyl-4-hydroxyphenylpropionic acid and 2,6-di-t.butyl-4-methylphenol. The moulded samples had notched Izod impact strengths of 25 and 31.6 m.kg/m.

Example 7

Moulded samples of a blend of the linear alternating polymer of Comparative Example D were produced with the same procedure as described in Comparative Example E except that 10% by weight (based on total blend) of SURLYN 9520 was added in addition to 1,3,5-tris(3,5-di-t.butyl-4-hydroxybenzyl)-benzene, and that the extrusion temperature was 270 °C. The polymer blend exhibited good melt strength in comparison to the polymer of Comparative Example E. The moulded samples had notched Izod impact strengths of 17.4 and 18.5 m.kg/m and were easy to mould.

Comparative Example F

A linear alternating terpolymer of carbon monoxide, ethylene and propylene was produced in the presence of a catalyst composition formed from palladium acetate, the anion of trifluoroacetic acid and 1,3-bis[di(2-methoxyphenyl)phosphino]propane. The melting point of the polymer was 220 °C and the polymer had a limiting viscosity number (LVN) of 1.78 when measured in m-cresol at 60 °C. A small amount of the n-octadecyl ester of 3-(3,5-di-t.butyl-4-hydroxyphenyl)propanoic acid, a conventional hindered phenolic antioxidant, was added as a stabilizer.

The terpolymer was extruded in a twin screw extruder at 271 °C and 300 rpm, then injection moulded at 275 °C for measurement of impact strength and other properties. The moulded sample had a notched Izod impact strength of 25 m.kg/m and other properties as shown in Table II.

Example 8

A moulded sample of a blend of the linear alternating polymer of Comparative Example F was produced with the same procedure as described in Comparative Example F except that before extrusion 0.5% by weight of 1,3,5-tris(3,5-di-t.butyl-4-hydroxybenzyl)benzene and 10% by weight (based on total blend) of SURLYN 9520 were added instead of the n-octadecyl ester of 3-(3,5-di-t.butyl-4-hydroxyphenyl)propanoic acid and the extrusion temperature was 275 °C. The polymer blend exhibited good melt strength and better processability in comparison to the polymer of Comparative Example F. The moulded sample had a notched Izod impact strength of 21.2 m.kg/m and other properties as shown in Table II.

TABLE II

| Comp. | Tan. Modulus GPa | Stress, Max MPa | %Strain @ Max Tensile | Stress, Break MPa | %Strain, Break %(Range) |
|---|---|---|---|---|---|
| Example F | 1.38 | 61 | 20 | 47 | 112 (51-154) |
| Example 8 | 1.39 | 56 | 18 | 34 | 45 (18-54) |

## Claims

1. Polyketone polymer composition characterized in comprising, as a major component, a linear alternating polymer of carbon monoxide and at least one ethylenically unsaturated hydrocarbon and, as a minor component, a partial non-alkali metal salt of a polymer of an α-olefin and an α,β-ethylenically unsaturated carboxylic acid.

2. A composition as claimed in claim 1 characterized in that the linear alternating polymer is represented by the formula

$$-\left[CO-(CH_2-CH_2)\right]_x-\left[CO-(D)\right]_y-$$

wherein D is the moiety of an ethylenically unsaturated hydrocarbon of at least 3 carbon atoms polymerized through the ethylenic unsaturation, and the ratio of y:x is no more than 0.5:1.

3. A composition as claimed in claim 2 characterized in that the minor component is a partially neutralized polymer of at least 80% by mol α-olefin of up to 10 carbon atoms inclusive, from 1% by mol to 20% by mol, based on the polymer, of an α,β-ethylenically unsaturated carboxylic acid of up to 10 carbon atoms inclusive, and from 0 to 5% by mol, based on total polymer, of a non-acidic, low molecular weight polymerizable monomer of up to 8 carbon atoms inclusive.

4. A composition as claimed in claim 3 characterized in that from 10% to 90% of the original carboxyl groups of the partially neutralized polymer have been neutralized with an ionizable zinc compound.

5. A composition as claimed in claim 3 characterized in that the minor component is a polymer of at least 80% by mol, based on total polymer, of ethylene, from 1% to 20% by mol, based on total polymer, of methacrylic acid, from 35% to 75% of the carboxyl groups being neutralized with an ionizable zinc compound.

6. A composition as claimed in claim 3 characterized in that the minor component is present in a quantity of from 0.2% by weight to 35% by weight, based on total composition.

7. A composition as claimed in claim 6 characterized in that D is a moiety of propylene.

8. A process for the preparation of a composition as claimed in any of claims 1-7, characterized by comprising the steps of:
preparing a linear alternating polymer from carbon monoxide and at least one ethylenically unsaturated compound by polymerizing said monomers in the presence of a catalyst composition based upon a palladium compound, an anion of a non-hydrohalogenic acid having a pKa below 6, and a bidentate ligand of phosphorus; and
blending the linear alternating polymer with a lesser amount of a polymer comprising a partial non-alkali metal salt of a polymer of an α-olefin and an α,β-ethylenically unsaturated carboxylic acid.

9. A process as claimed in claim 8 characterized in that the linear alternating polymer and the partial non-alkali metal salt are melt blended.